Europäisches Patentamt

European Patent Office

Office européen des brevets

(11) Publication number: **0 319 803**
**A2**

## EUROPEAN PATENT APPLICATION

(21) Application number: 88119712.3

(22) Date of filing: 25.11.88

(51) Int. Cl.4: **G11B 21/08** , //G11B5/55

(30) Priority: 11.12.87 JP 314460/87

(43) Date of publication of application:
**14.06.89 Bulletin 89/24**

(84) Designated Contracting States:
**DE FR GB**

(71) Applicant: **MITSUBISHI DENKI KABUSHIKI KAISHA**
**2-3, Marunouchi 2-chome Chiyoda-ku**
**Tokyo 100(JP)**

(72) Inventor: **Ikeshita, Koji c/o Mitsubishi Denki K.K.**
**Itamiseisakusho 1-1, 8-chome,**
**Tukaguchihonmachi**
**Amagasaki-shi Hyogo-ken(JP)**

(74) Representative: **Goddar, Heinz J., Dr. et al**
**FORRESTER & BOEHMERT**
**Widenmayerstrasse 4/I**
**D-8000 München 22(DE)**

(54) **Head position controlling circuit of a disc apparatus.**

(57) A head position controlling circuit of a disc apparatus, in which & positioning gap amount detecting circuit detects at every settled time interval the gap amount of each head to the standard head position and memorizes them in a memory means. And after selecting a head as a standard head, when an access is appointed to a head, the position of said head is corrected by the difference between the gap amount which is read out from said memory media and the gap amount of said head to the standard head.

FIG.1

EP 0 319 803 A2

## Head Position Controlling Circuit of a Disc Apparatus

### Background of the Invention

### Field of the Invention

Present invention relates to a disc apparatus with buit-in disc-shape memory media such like a magnetic disc which is used as outer memory device for computer system or a photo-disc which is in use for document failing system. And more particularly this invention relates to a position controlling circuit of a head reading out a information on each discs.

### Description of the Prior Art

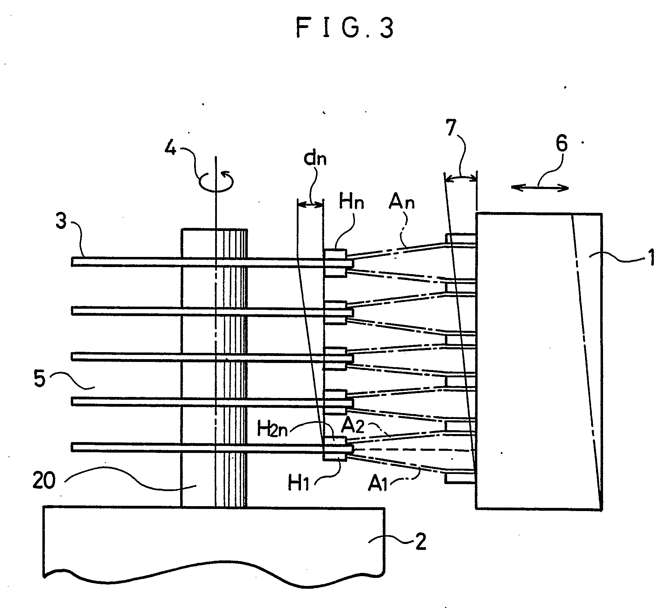

Fig. 3 is a sectional side elevation view of a general construction of conventional disc apparatus, which is disclosed by Japan patent publishing of unexamined patent application No. 61-26980.

In the Fig. 3, n pieces arms $A_1 \sim A_n$ are fitted to a head carriage 1, and heads $H_1 \sim H_n$ are mounted at the end of each arms $A_1 \sim A_n$.

Meanwhile, a plurality of magnetic disc 3, for example the number of n/2 which are the half numbers of the heads $H_1 \sim H_n$, are mounted at a rotatinal axis 20 of a spindle motor 2, and they are rotated to the direction to an arrow 4 showned in Fig. 3. And these head $H_1 \sim H_n$ are arranged towards a information recording surface 5 formed on a both sides of each magnetic disc 3 for a writing and a reading of a information.

By the way plural information recording tracks which are concentric circle-shape of a rotation center are formed on the information recording surface 5 of each magnetic disc 3, and samely positioned tracks of each magnetic disc 3 are named cylinder. When these head $H_1 \sim H_n$ gain access to the information recording surface 5 of each magnetic disc 3, according to a movement in a body of the head carriage 1 and each heads $H_1 \sim H_n$ towards the center of the rotatinal axis 20 in the direction to the arrow 6, each heads $H_1 \sim H_n$ may be accessed to the samely positioned tracks on the information recording surface 5 of each magnetic disc 3.

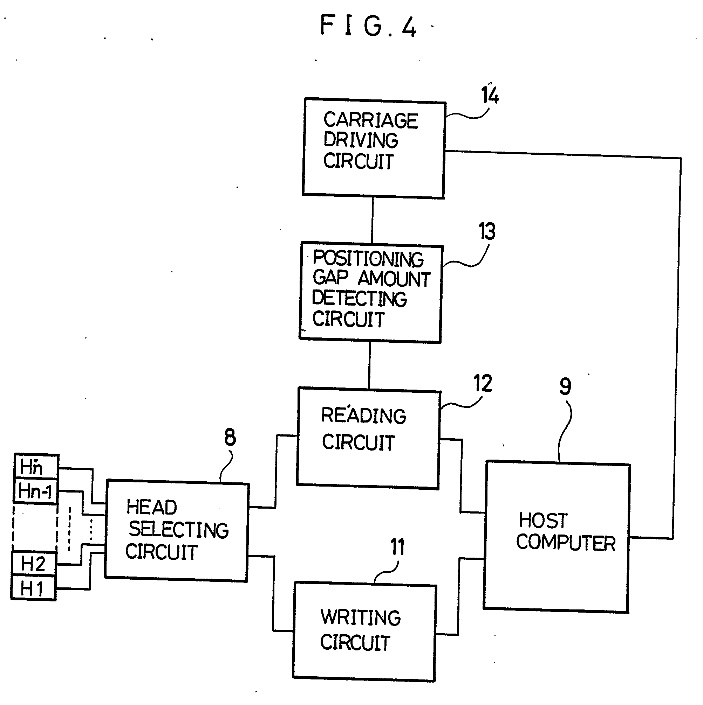

Fig. 4 is a schematic block diagram illustrating the head controlling circuit of the above described disc apparatus.

In the drawing, a head selecting circuit 8 selects a instruction added by a host computer 9, that is to say, selects one of the heads $H_1 \sim H_n$ according to the head address. In other words, according to the selecting of the head $H_x$ with adding the head address to the head selecting circuit 8, a information may be written on the information recording surface 5 of magnetic disc 3 which is correspond with the selected head $H_x$ and also the information may be read out from the recording surface 5.

When the information is written by the selected head $H_x$, data are added to a writing circuit 11 from the host computer 9, and when the information is read out by the selected head $H_x$, data are added to the host computer 9 by a reading circuit 12.

When the data are read out from the magnetic disc 3 by the reading circuit 12, a positioning gap of the magnetic disc 3 may be detected by a positioning gap amount detecting circuit 13 according to the data which are read out from the magnetic disc 3. This above discribed detecting is obtained from each tracks with reading out a servo information which indicates the position of the selected head $H_x$ facing to the magnetic disc 3.

The detected amount by the positioning gap amount detecting circuit 13 is added to a carriage driving circuit 14, and the head carriage 1 is moved towards the direction shown by the arrow 6, in other words, the direction to and from the rotatinal axis 20 of the spindle motor 2. Thus, the selected head $H_x$ is positioned at the fixed position of the track on the magnetic disc 3 corresponding with the head $H_x$.

But, when the head carriage 1 is moved towards the direction to the axis 20 of the spindle motor 2, the head carriage 1 is occasionaly inclined like the numeral 7 shown in Fig. 3. When the head carriage 1 is inlined, gaps of the accessing position of each head $H_1 \sim H_n$ facing to each magnetic disc 3 are occured. Therefore, these gaps must be corrected, and according to the patent described in the Japan patent publishing unexamined patent application No. 61-26980, the half amount of the gap of the accessing position of the head $H_1$ or the head $H_n$ mounted at the opposit ends of the head carriage 1.

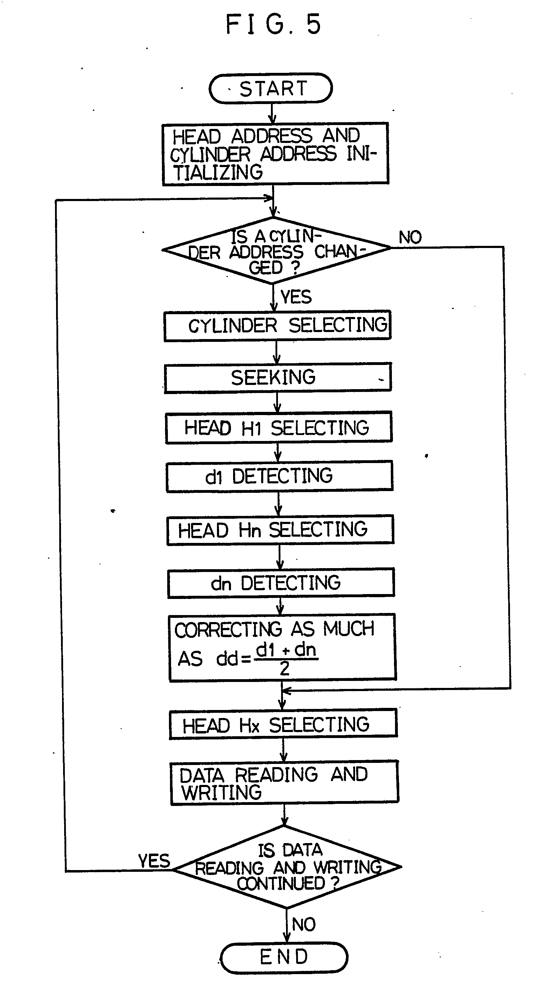

Fig. 5 is a flow-chart of the correcting movement by the above described positioning gap amount detecting circuit 13.

When the address of the cylinder is changed, the address which is newly chosed will be fed to the carriage driving circuit 14 from the host computer 9, thus the track corresponding to the selected head address will be detected and the head carriage 1 will be moved to the standard position of the track.

In the next step, the lowest positioned head is chosed by the head selecting circuit 8. Thus, the information on the track designated by the address of the track is read out by the head $H_1$ and the reading circuit 12, therefore, the gap $d_1$ to the standard position is detected by means of the positioning gap detecting circuit 13.

In the farther more step, the highest positioned head is chosed by the head selecting circuit 8. And so forth, the information is read out by the head $H_n$ using the reading circuit 12, and the gap $d_n$ of the head $H_n$ to the standard position is detected by the positioning gap amount detecting circuit 13.

And the average of the gap $d_1$ of the head $H_1$ and the gap $d_2$ of the head $H_2$ is calculated, so the head carriage 1 is moved to correct the avarage amount of the gaps of these heads.

After the correction of the head position, the head $H_x$ which is actualy accessed and selected by the head selecting circuit 8, so that the information is written by the writing circuit 11 on the track designated by the head address corresponding to the magnetic disc 3, or so that the information is read out by the reading circuit from the track.

Then the other head is selected without the change of the cylinder address, in other words, only by the change of the head address in the same cylinder address, a writting and a reading of the information is carried out in the same manner above described through the head facing to the magnetic disc 3 corresponding to the head.

On the other hand, when the cylinder address is changed, the movement of the head carriage 1 and the correction of the average of the gap $d_1$ of the head $H_1$ and the gap $d_2$ of the head $H_2$ are carried out in the same way above described.

Therefore, as for the disc apparatus which is described in the Japan patent publishing of unexamined patent application No. 61-26980, when the head address is changed without changing of the cylinder address, the correction of the head position is not carried out.

As for the invention disclosed by the said Japan patent publishing of unexamined patent application No. 61-26980, after the decision of the position of the head, in the case of changing the head address without changing the cylinder address, the correction of the head position is not carried out, thereby a serious problem exists in the accuracy of head position.

Summary of the Invention

In view of the foregoing, it is an object of the present invention to provide a head position controlling circuit of a disc apparatus, which may correct more acuratly the gap of head position caused by a inclination of a head carriage to a magnetic disc track to be accessed.

The head position controlling circuit of the disc apparatus of the present invention includes a plurality of disc-shape memory media arranged in having a same rotatinal axis, and a plurality of head for reading a information from each tracks of sard pluralty of disc-shape memory media, the head carriage to move wholy those neads to the direction to and from the said rotatinal axis, and a position information detecting circuit for detecting the position information showing the each tracks which are read out from the track by said heads, and a positioning gap amount detecting circuit detecting the gap of the head position to the track designated by the information detected by said position detecting circuit, and a carriage driving circuit to move said carriage to deduct said gap in accordance with the result of said positioning gap amount detecting circuit, a timer for making said positioning gap amount detecting circuit detect the gaps of each head to the standard position to the designated track, the memory media to memorize the gap amount of each head detected by said positioning gap amount detecting circuit. Said carriage driving circuit including the calculating means for the difference between the gap of the standard head position in a plurality of said head and the gap of the designated head position, and said carriage is moved for reducing the difference of the gap calculated by said calculating means.

The above and other objects, features, and advantages of the Invention will become more apparent from the following description when take in conjunction with the accompaning drawings.

Brief Description of the Drawings

Fig. 1 is a block diagram illustrating a head position controlling circuit of the present invention.

Fig. 2 is a flow chart illustrating a process of said controlling circuit.

Fig. 3 is a schematic representation illustlating a disc apparatus to which the conventional head position controlling circuit is applyed.

Fig. 4 is a block diagram illustrating said conventional controlling circuit.

Description of the Preferred Embodiment

Referring now to the drawings illustrating the preferred embodiment of the invention for a more complete understanding of the invention.

It is needless to say that the head position controlling circuit of the invention is applicable to the conventional disc apparatus such as illustrated in Fig. 3.

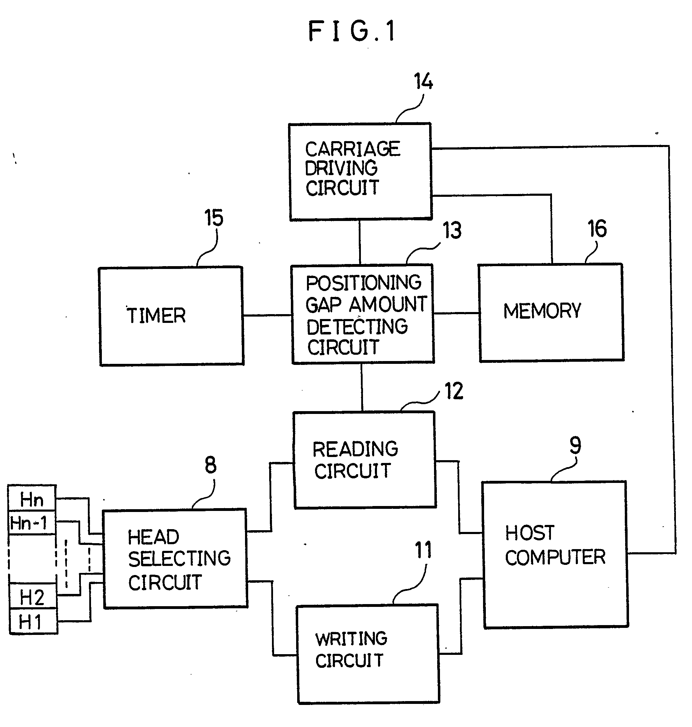

Fig. 1 is a block diagram illustrating the head position controlling circuit of the invention.

With reference to Fig. 1, in which parts similar to those previously described with reference to Fig. 4 illustrating the conventional circuit are denoted by the same reference numerals and characters, the head selecting circuit 8 which selects one of the heads $H_1 \sim H_n$ according to the instructions given by the host computer 9, in other words, with the head address. That is to say, when a head $H_x$ is selected according to the given address to the head selecting circuit 8, the head $H_x$ will therefore may write on the information recording sufface 5 of the magnetic disc 3 and also read out a information from said information recording surface 5.

When the head $H_x$ is selected for writing a information in this manner, the host computer 9 will give a data to a writing circuit 9, and when the head $H_x$ is selected for reading a information in this manner, a reading circuit 12 will give a data to the host computer 9.

When a data is read out from a magnetic disc 3 by means of a reading circuit 12, the head $H_x$ position will be detected and the amount of positioning gap of the magnetic disc 3, in other words, the positioning gap in the access $d_1 \sim d_n$ (shown in Fig. 3) to each heads $H_1 \sim H_n$ caused by the movement of the head carriage 1 to a spindol moter 2 by means of a positioning gap detecting circuit 13. And the results of the detecting by means of the positioning gap amount detecting circuit 13 will be added to a carriage driving circuit 14 for moving the head carriage 1 to the direction of a reference arrow 6 by means of the carrage driving circuit 14 in accordance with the process as is described in the latter part. Therefore, the head $H_x$ selected by the cylinder address may be fixed at the appointed track position.

A timer 15 and a memory 16 to memorise the detecting result of the positioning gap amount detecting circuit 13 will be used for the correction of the head position by means of the carriage driving circuit 14.

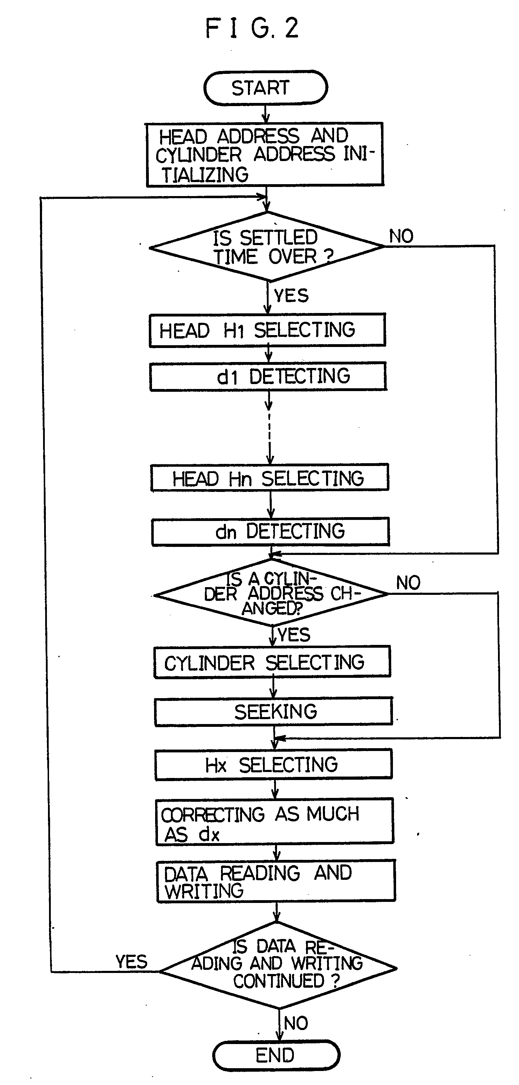

Fig. 2 is a flow chart illustrating a process of the correction of the head position by means of the head position controlling circuit of the present invention.

At first, in the head position controlling circuit of the invention, one of the heads $H_1 \sim H_n$, for example, the head $H_1$ positioned at the top end, or the head $H_n$ positioned at the bottom end, or the head positioned at the central point is previously selected as a serbo head $H_s$ for the controlling standard.

The timer 15 counts constantly the fixed time T. Each time at the counting the time T, the positioning gap amount detecting circuit 13 reads out the servo information of the track corresponding to the cylinder address one after another through the each head $H_1 \sim H_n$ by means of reading circuit 12, and the each head $H_1 \sim H_n$ detects the amount of the gap $d_1 \sim d_n$ to the standard position and memorizes said amount of the gap $d_1 \sim d_n$.

When the cylinder address is changed, so the newly selected cylinder address will be fed to the carriage driving circuit 14 by the host computer 9 that the head carriage 1 will be moved to the standard position by seeking out the head address selected by the servo head $H_s$.

In the next step, when the head address is instructed by the host computer 9, the carriage driving circuit 14 will calculate the difference dd, $d_s$-$d_x$, the gap between the servo heads $H_s$ and the head $H_x$ appointed by the head address, and also will correct the head position as much as the difference dd in accordance with the movement of the head carriage 1.

After the correction of the head position in the above described manner, the head $H_x$ corresponding to the appointed head address is selected by the head selecting circuit 8, and the head $H_x$ writes a information with a writing circuit 11 at the track on the corresponding magnetic disc 3 and reads out a informaiton with the reading circuit 12 from the said track on the magnetic disc 3.

Whenever the other head is selected without any change of the cylinder address, in other words, under the same cylinder address, the difference dd of the head position between the serbo head $H_s$ and newly selected head address will be calculated in the above described manner, and the correction of the head position will be carried out as much as the difference dd. After then the writing and the reading of the information will carry out.

Meanwhile, when the cylinder address is changed, the head carriage 1 will be moved for seeking the newly selected head address and the correction in accordance with the standard by the servo head $H_s$ will be carried out.

While the above described embodiment of this invention is applied to the apparatus used in two way for writing and reading, it is needless to say that the present invention is applied to the apparatus used in only one for writing or reading.

As described above, according to the present invention, since the appointed head in a plurality of the head is situated as the standard position and the gap amount between the position of the each head and said standard position is detected and memorized, when the head address is appointed, the gap amount between the position of the each head and the standard position is arranged to be corrected, whenever the head address is changed, the gap may be accurately corrected. And therefore, at the case of a writing of the information or a reading of the information, the occurrence of error may be prevented.

The features disclosed in the foregoing description, in the claims and/or in the accompanying drawings may, both separately and in any combination thereof, be material for realising the invention in diverse forms thereof.

## Claims

1. A head position controlling circuit of a disc apparatus, comprising a plurality of disc-shape memory media arranged under the condition of ajustment of each rotatinal axis, a pluralty of heads for reading out a information from the each tracks of said plurality of disc-shape memory media, a head carriage to move wholy these heads to a direction towards the axis, positioning information detecting circuit for detecting the positioning information showing the each tracks which is read out from the head by said head, a positioning gap amount detecting circuit detecting the gap of the head position to the designated track by the information detected by said positioning information detecting circuit, a carriage driving circuit for moving said carriage to deduct said gap in accordance with the result of said positioning gap amount detecting circuit characterized in that there are provided a timer to make said positioning gap amount detecting circuit detects the gaps of each heads to the standard position in accordance with the designated track, a memory means to memorize the gap amount of each head detected by said positioning gap amount detecting circuit, and said carriage driving circuit including a calculating means for the difference between the gap of the standard head position in a plurality of said head and the gap of the designated head position, and said carriage is moved to deduct the difference of the gap calculated by said calculating means.

2. A head position controlling circuit of a disc apparatus as claimed in claim 1, in which the head positioned at the top end or the head positioned at the bottom end is selected as the standard head.

3. A head position controlling circuit of a disc apparatus as claimed in claim 1, in which the central head is selected as the standard head.

# F I G . 1

# F I G. 2

```
                    ┌─────────────┐
                    │    START    │
                    └──────┬──────┘
                           ↓
              ┌────────────────────────┐
              │ HEAD ADDRESS AND        │
              │ CYLINDER ADDRESS INI-   │
              │ TIALIZING               │
              └───────────┬────────────┘
                          ↓
                   ◇ IS SETTLED ◇  ── NO ──┐
                   ◇ TIME OVER ? ◇          │
                          │                 │
                        YES                 │
                          ↓                 │
              ┌────────────────────────┐    │
              │ HEAD H1 SELECTING       │    │
              └───────────┬────────────┘    │
                          ↓                 │
              ┌────────────────────────┐    │
              │ d1 DETECTING            │    │
              └───────────┬────────────┘    │
                          ⋮                 │
              ┌────────────────────────┐    │
              │ HEAD Hn SELECTING       │    │
              └───────────┬────────────┘    │
                          ↓                 │
              ┌────────────────────────┐    │
              │ dn DETECTING            │    │
              └───────────┬────────────┘    │
                          ↓ ←───────────────┘
                   ◇ IS A CYLIN- ◇ ── NO ──┐
                   ◇ DER ADDRESS CH- ◇      │
                   ◇ ANGED? ◇               │
                          │                 │
                        YES                 │
                          ↓                 │
              ┌────────────────────────┐    │
              │ CYLINDER SELECTING      │    │
              └───────────┬────────────┘    │
                          ↓                 │
              ┌────────────────────────┐    │
              │ SEEKING                 │    │
              └───────────┬────────────┘    │
                          ↓ ←───────────────┘
              ┌────────────────────────┐
              │ Hx SELECTING            │
              └───────────┬────────────┘
                          ↓
              ┌────────────────────────┐
              │ CORRECTING AS MUCH      │
              │ AS dx                   │
              └───────────┬────────────┘
                          ↓
              ┌────────────────────────┐
              │ DATA READING AND        │
              │ WRITING                 │
              └───────────┬────────────┘
                          ↓
         YES ──── ◇ IS DATA RE- ◇
                  ◇ ADING AND WRITING ◇
                  ◇ CONTINUED ? ◇
                          │
                         NO
                          ↓
                    ┌─────────────┐
                    │    END      │
                    └─────────────┘
```

# FIG.3

# FIG. 4

# F I G. 5

```
              ( START )
                  │
                  ▼
    ┌─────────────────────────┐
    │ HEAD ADDRESS AND        │
    │ CYLINDER ADDRESS INI-   │
    │ TIALIZING               │
    └─────────────────────────┘
                  │
                  ▼
    ◇─────────────────────────◇     NO
     IS A CYLIN-                ──────────┐
     DER ADDRESS CHAN-                    │
     GED ?                                │
    ◇─────────────────────────◇          │
              │ YES                       │
              ▼                           │
    ┌─────────────────────────┐          │
    │ CYLINDER SELECTING      │          │
    └─────────────────────────┘          │
                  │                       │
                  ▼                       │
    ┌─────────────────────────┐          │
    │ SEEKING                 │          │
    └─────────────────────────┘          │
                  │                       │
                  ▼                       │
    ┌─────────────────────────┐          │
    │ HEAD H1 SELECTING       │          │
    └─────────────────────────┘          │
                  │                       │
                  ▼                       │
    ┌─────────────────────────┐          │
    │ d1 DETECTING            │          │
    └─────────────────────────┘          │
                  │                       │
                  ▼                       │
    ┌─────────────────────────┐          │
    │ HEAD Hn SELECTING       │          │
    └─────────────────────────┘          │
                  │                       │
                  ▼                       │
    ┌─────────────────────────┐          │
    │ dn DETECTING            │          │
    └─────────────────────────┘          │
                  │                       │
                  ▼                       │
    ┌─────────────────────────┐          │
    │ CORRECTING AS MUCH      │          │
    │ AS  dd = (d1+dn)/2      │          │
    └─────────────────────────┘          │
                  │◄───────────────────────┘
                  ▼
    ┌─────────────────────────┐
    │ HEAD Hx SELECTING       │
    └─────────────────────────┘
                  │
                  ▼
    ┌─────────────────────────┐
    │ DATA READING AND        │
    │ WRITING                 │
    └─────────────────────────┘
                  │
                  ▼
  YES   ◇─────────────────────◇
  ┌───── IS DATA
  │      READING AND WRITING
  │      CONTINUED ?
  │      ◇─────────────────────◇
  │             │ NO
  │             ▼
  │         ( END )
  └─(back to IS A CYLINDER ADDRESS CHANGED?)
```

$$dd = \frac{d1 + dn}{2}$$